# EUROPEAN PATENT APPLICATION

(11) **EP 3 825 125 A1**
(43) Date of publication of application: **26.05.2021**
(21) Application number: 20275167.3
(22) Date of filing: 10.11.2020
(51) Int. Cl.: B32B 37/00, B29C 65/00, B32B 41/00, B32B 38/18

(54) **LAMINATING ROLLERS**

(30) Priority: 22.11.2019 GB 201917027
(71) Applicant: Vivid Laminating Technologies Limited, Leicestershire LE65 2UZ (GB)
(72) Inventor: Ward, Gavin, Ashby de la Zouch, Leicestershire LE65 2UZ (GB)
(74) Representative: Serjeants LLP

(57) **Abstract**

A laminator (1) includes a laminating roller (2). A cylindrical outer surface (4) of the laminating roller (2) comprises a reflective (e.g., chrome plated) surface region (4a) and a non-reflective surface region (4b). A non-contact temperature sensor (6) is spaced apart from the laminating roller (2) in the radial direction and aligned with the non-reflective surface region (4b) of the laminating roller in the axial direction to provide accurate temperature measurements of the non-reflective surface region.

## Description

### Technical field

The present invention relates to laminating rollers, and in particular to heated laminating rollers that are adapted to be rotatably installed in a laminator and used to laminate a workpiece, e.g., to adhere a vinyl coating or other similar coating to a surface of the workpiece.

### Background of the invention

Laminators normally include at least one laminating roller. If the laminating roller is heated, the laminator must be able to control the heating to consistently maintain a user-defined laminating temperature. This normally requires the temperature of the laminating roller to be measured accurately. The heated laminating roller is typically a chrome plated roller (i.e., its outer surface comprises a layer of chromium or chromium alloy) which means that it is relatively hard wearing and has a good heat capacity. It also means that the outer surface of the laminating roller is highly reflective.

The temperature of the heated laminating roller is typically measured using a contact temperature sensor. The contact temperature sensor is in direct physical contact with the outer surface of the heated laminating roller as it rotates and provides a series of temperature measurements that the laminator can use to control the heating. It has been recognised by the applicant that the temperature measurements provided by such contact temperature sensors are not always accurate. The direct physical contact between the heated laminating roller and the contact temperature sensor can also cause the outer surface of the roller to be worn away, resulting in a shallow groove or channel in the chrome plating that has a negative impact on the quality of the laminating process. The contact with the laminating roller can also result in the contact temperature sensor being damaged or degraded.

Non-contact temperature sensors are known, e.g., infrared temperature sensors that use one or more photodetectors to detect infrared energy emitted by an object. The photodetectors convert the detected infrared energy into an electrical signal. Because the emitted infrared energy of any object is proportional to its temperature, the electrical signal provides an accurate measurement of the temperature of the object. However, such non-contact temperatures sensors have not been used in laminators because they can experience problems when the object whose temperature is to be measured has a highly reflective surface such as with a rotating chrome plated laminating roller.

### Summary of the invention

The present invention aims to solve the above problems and provides a laminating roller for a laminator, a cylindrical outer surface of the laminating roller comprising a reflective surface region and a non-reflective (or matt) surface region.

The reflective surface region can comprise a layer or coating of metal or metal alloy, e.g., like a conventional chrome plated heated laminating roller where the reflective surface region can comprise a layer of chrome or chrome alloy.

The non-reflective surface region preferably extends completely around the circumference of the cylindrical outer surface of the laminating roller. In one arrangement, the non-reflective surface region can be provided in the form of a band or strip that extends around the laminating roller, for example. The band or strip can be about 1-2 cm wide, for example.

The non-reflective surface region can be at an axial end of the laminating roller so that it does not interfere with the laminating process - typically it is the middle part of the laminating roller which is used to contact the workpiece. The outer surface of the laminating roller can also comprise a second non-reflective surface region at the opposite axial end of the laminating roller.

The non-reflective surface region can comprise any suitable non-reflective material. The non-reflective surface region can comprise a layer or coating of non-reflective material, for example. The layer or coating of non-reflective material can be provided in a recess or channel formed in the outer surface of the laminating roller so that the laminating roller has a substantially constant diameter along its full axial length. Such a recess or channel can be about 1-2 cm wide, for example. The layer or coating of non-reflective material can also be applied to the outer surface of the laminating roller without the need for a recess or channel if the layer or coating is sufficiently thin. In use, the laminating roller will typically be heated to about 120°C and the non-reflective material must therefore be stable at this temperature - and preferably at higher temperatures. Any suitable non-reflective material can be used, including a non-reflective paint, and it can be of any suitable colour although a dark colour or black may be preferred.

In use, the laminating roller will be rotatably installed in a laminator that also includes a non-contact temperature sensor (e.g., an infrared temperature sensor). The non-contact temperature sensor will be positioned relative to the laminating roller to provide temperature measurements of the laminating roller, and in particular temperature measurements of its non-reflective surface region. It is therefore preferred that the metal or metal alloy that can define the reflective surface region and the non-reflective material have substantially the same thermal conductivity (or heat transfer capability) so that the temperature of the non-reflective surface region that is measured by the non-contact temperature sensor is substantially the same as the temperature of the reflective surface region which will contact the workpiece during the laminating process.

The temperature measurements provided by the non-contact temperature sensor will be more accurate than those provided by a conventional contact temperature sensor and can be used by the laminator for improved heating control of the laminating roller. The problems experienced with using non-contact temperature sensors with objects that have highly reflective surfaces are avoided by deliberately providing a non-reflective surface region of the laminating roller that can be used for accurate temperature measurement. Accurate heating control can be achieved by measuring the temperature of the non-reflective surface region, and in particular the infrared energy emitted by the non-reflective surface region of the laminating roller if the non-contact temperature sensor is an infrared temperature sensor. Using a non-contact temperature sensor also prevents any wear on the laminating roller because there is no physical contact. There is no deterioration in the quality of the laminating process and the operating lifetime of both the laminating roller and the temperature sensor is significantly increased.

The present invention further provides a laminator comprising a laminating roller as described above and a non-contact temperature sensor spaced apart from the laminating roller in the radial direction (i.e., so that there is no physical contact between the sensor and the laminating roller) and aligned with the non-reflective surface region of the laminating roller in the axial direction. The non-contact temperature sensor is positioned relative to the laminating roller so as to provide temperature measurements of the non-reflective surface region which can be used by the laminator to control the heating of the laminating roller.

The non-contact temperature sensor can be an infrared temperature sensor or any other suitable temperature sensor. Suitable infrared temperature sensors can include commercially-available infrared thermocouple-type sensors, infrared thermometers and infrared pyrometers, for example.

If the outer surface of the laminating roller comprises two non-reflective surface regions (e.g., at an opposite axial ends of the laminating roller), the laminator can include two non-contact temperature sensors - each being spaced apart from the laminating roller in the radial direction and aligned with a respective non-reflective surface region of the laminating roller in the axial direction to provide temperature measurements of the respective non-reflective surface region.

The present invention further provides a method of controlling heating of a laminating roller, a cylindrical outer surface of the laminating roller comprising a reflective surface region and a non-reflective surface region, based on a measured temperature of the non-reflective surface region. The measured temperature can be obtained using a non-contact temperature sensor such as an infrared temperature sensor, for example.

### Drawings

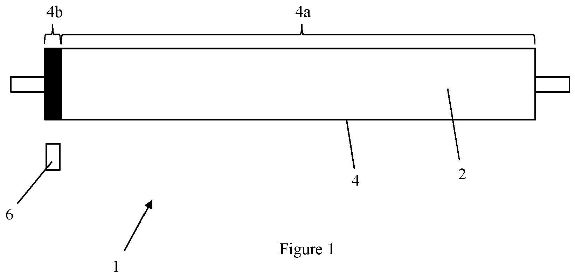

Figure 1 is a schematic view of a laminator with a laminating roller according to the present invention.

A laminator 1 comprises a heated laminating roller 2 for contacting a workpiece, e.g., a sheet of material to be laminated by adhering a film of laminating material in contact with a surface of the sheet.

The cylindrical outer surface 4 of the laminating roller 2 includes a chrome plated surface region 4a which is hard wearing and highly reflective. A non-reflective (or matt) surface region 4b is provided at one axial end of the laminating roller 2. The non-reflective surface region 4b can comprise a strip or band of suitable non-reflective material that is located in an annular recess or channel (not shown) in the outer surface of the laminating roller 2 so that the outer surface of the non-reflective material is flush with the outer surface of the chrome plated surface region 4a. The strip or band of non-reflective material is about 1-2 cm wide. Alternatively, the non-reflective surface region 4b can comprise a thin layer or coating of suitable non-reflective material applied over an axial end part of the chrome plated region. In other words, the laminating roller 2 can be substantially identical to a conventional chrome plated laminating roller but with the addition of a thin layer or coating of suitable non-reflective material applied to its outer surface in a strip or band that extends completely around the circumference of the laminating roller 2 as shown. This can be cost-effective because conventional chrome plated laminating rollers can be used without the need for substantial modification and there is no significant reduction in lamination quality if the non-reflective layer or coating that is applied to the outer surface is sufficiently thin. In one arrangement, the non-reflective material can be a paint with a high opacity, non-reflective matt finish and which is resistant to the maximum operating temperature of the laminator (e.g., 120°) and is suitable for direct application to the outer surface of a conventional chrome plated laminating roller.

The laminator 1 includes an infrared temperature sensor 6 that is spaced apart from the laminating roller 2 in the radial direction and is axially aligned with the non-reflective surface region 4b as shown. The infrared temperature sensor 6 provides temperature measurements of the non-reflective surface region 4b of the laminating roller 2 which the laminator 1 uses to control heating of the laminating roller. The non-reflective material that defines the non-reflective surface region 4b is selected to have substantially the same thermal conductivity (or heat transfer capability) as the chrome plated surface region 4a and/or is applied in a thin layer or coating such that both regions of the outer surface 4 of the laminating roller 2 are at substantially the same temperature. The temperature of the chrome plated region 4a which contacts the workpiece during the laminating process can therefore be determined accurately by measuring the infrared energy emitted by the non-reflective surface region 4b using the infrared temperature sensor 6.

## Claims

1. A laminating roller (2) for a laminator (1), a cylindrical outer surface (4) of the laminating roller (2) comprising a reflective surface region (4a) and a non-reflective surface region (4b).

2. A laminating roller (2) according to claim 1, wherein the non-reflective surface region (4b) extends completely around the circumference of the cylindrical outer surface (4).

3. A laminating roller (2) according to claim 1 or claim 2, wherein the non-reflective surface region (4b) is at an axial end of the laminating roller (2).

4. A laminating roller (2) according to any preceding claim, wherein the reflective surface region (4a) comprises a layer or coating of metal or metal alloy and the non-reflective surface region (4b) comprises a layer or coating of non-reflective material.

5. A laminating roller (2) according to claim 4, wherein the reflective surface region (4a) comprises chromium or chromium alloy.

6. A laminating roller (2) according to claim 4 or claim 5, wherein the metal or metal alloy and the non-reflective material have substantially the same thermal conductivity.

7. A laminator (1) comprising a laminating roller (2) according to any preceding claim and a non-contact temperature sensor (6) spaced apart from the laminating roller (2) in the radial direction and aligned with the non-reflective surface region (6b) of the laminating roller (2) in the axial direction.

8. A laminator (1) according to claim 7, wherein the non-contact temperature sensor (6) is an infrared temperature sensor.

9. A method of controlling heating of a laminating roller (2), a cylindrical outer surface (4) of the laminating roller (2) comprising a reflective surface region (4a) and a non-reflective surface region (4b), based on a measured temperature of the non-reflective surface region (4b).
